Europäisches Patentamt

**European Patent Office**

Office européen des brevets

(11) Numéro de publication : **0 059 665**
**B1**

(12)

# FASCICULE DE BREVET EUROPÉEN

(45) Date de publication du fascicule du brevet :
**18.01.84**

(51) Int. Cl.³ : **F 16 F   9/02**, F 16 F   9/49

(21) Numéro de dépôt : **82400329.7**

(22) Date de dépôt : **25.02.82**

(54) **Ressort pneumatique à verrouillage de tige de piston.**

(30) Priorité : **27.02.81 FR 8103968**

(43) Date de publication de la demande :
**08.09.82 Bulletin 82/36**

(45) Mention de la délivrance du brevet :
**18.01.84 Bulletin 84/03**

(84) Etats contractants désignés :
**AT BE CH DE FR GB IT LI LU NL SE**

(56) Documents cités :
**FR-A- 1 069 114**
**FR-A- 2 243 372**
**FR-A- 2 311 967**
**FR-A- 2 347 575**
**FR-A- 2 376 341**
**FR-A- 2 433 680**
**GB-A-   539 498**
**GB-A-   949 426**
**GB-A- 1 161 859**
**US-A- 3 947 006**

(73) Titulaire : **Société J.G. ALLINQUANT**
**119, Avenue Paul Vaillant Couturier**
**F-94250 Gentilly (FR)**

(72) Inventeur : **Bich, René**
**42, rue de la Muette**
**F-78600 Maisons-Laffitte (FR)**

(74) Mandataire : **De Boisse, Louis**
**37, Avenue Franklin D. Roosevelt**
**F-75008 Paris (FR)**

Jouve, 18, rue St-Denis, 75001 Paris, France

Ressort pneumatique à verrouillage de tige de piston

Dans l'industrie automobile, on utilise couramment des systèmes de ressorts propres à réduire l'effort musculaire requis pour soulever des panneaux de carrosserie pesants, comme les capots et les hayons. Il est en outre de plus en plus fréquent de remplacer les anciens ressorts mécaniques par des appareils télescopiques à cylindre et piston appelés ressorts pneumatiques ou ressorts à gaz. On pourra trouver une description de la constitution et du fonctionnement d'un ressort de ce genre dans le brevet français ALLINQUANT 75 16 138 déposé le 23 mai 1975 et publié sous le n° FR-A-2 311 967.

On rappellera simplement que la force d'un ressort pneumatique est fonction de la pression de gaz dont il est le siège et que les hommes de métier appellent « pression de gonflage ». Or le gaz remplissant le cylindre du ressort pneumatique est par principe soumis à la loi de Mariotte (ou de Boyle), ce qui revient à dire que l'effort porteur sera, toutes choses égales par ailleurs, sensiblement plus élevé par temps caniculaire que par grand froid. Comme il faut qu'en toutes circonstances une personne même sans grande vigueur puisse refermer le capot ou le hayon de la voiture à l'encontre du ressort pneumatique, le constructeur devra déterminer sa pression de gonflage en faisant entrer en ligne de compte les températures les plus élevées susceptibles d'être rencontrées, par exemple aux heures chaudes d'une journée d'été alors que la voiture est exposée au soleil.

Mais alors, si l'on se place à présent dans les conditions météorologiques inverses d'un temps froid, on s'aperçoit que le ressort pneumatique est « mou » et même, dans des cas limites, il peut s'avérer insuffisant pour maintenir en position soulevée le capot ou le hayon de la voiture, lequel risque de retomber intempestivement et d'occasionner des blessures à la personne penchée à ce moment sur le moteur ou le coffre.

C'est ce danger qu'on s'est déjà proposé d'éliminer grâce à l'aménagement sur le ressort pneumatique d'un système mécanique de blocage de celui-ci en position d'extension de l'appareil télescopique, laquelle correspond à l'ouverture du capot ou du hayon.

De tels systèmes de blocage en extension de ressorts pneumatiques sont décrits dans les brevets FR-A-2 347 575 et US-A-3 947 006 qui, l'un et l'autre, font appel à une gorge annulaire creusée dans la paroi du cylindre au niveau axial adéquat et dans laquelle s'engage un organe élastique de verrouillage associé au piston lorsque cet organe arrive à ce niveau axial. Un tel agencement, s'il remplit effectivement le but prescrit, présente néanmoins certains inconvénients :

— lors du montage en usine de l'appareil, nécessité de comprimer radialement l'organe élastique pour son introduction dans le cylindre et d'en assurer la fixation sur le piston, ce qui requiert un outillage spécial et rend malaisée l'automatisation du processus de fabrication,

— à l'usage, frottements permanents de l'organe élastique contre la paroi du cylindre tout au long de celui-ci, d'où résistance inutilement accrue et usure prématurée des pièces.

Un système analogue de blocage en extension d'un ressort pneumatique est décrit dans le brevet français FR-A-2 243 372, à ceci près qu'à l'inverse des deux brevets précédents, la gorge annulaire est creusée, non pas dans la paroi du cylindre pour recevoir l'organe élastique de verrouillage associé au piston, mais dans une pièce auxiliaire rapportée solidaire du piston et coopérant avec un jonc de verrouillage associé au cylindre.

En fait, cette pièce auxiliaire rapportée n'est pas quelconque : elle doit être soigneusement usinée en forme de douille dont la surface externe présente, au-delà de la gorge annulaire qui y est creusée, une rampe tronconique qui converge jusqu'à ce que son diamètre devienne égal à celui de la tige de piston. Au surplus, l'association du jonc de déverrouillage au cylindre requiert une autre pièce usinée auxiliaire en forme de douille sur la surface interne de laquelle est pratiquée une longue rainure dans laquelle est logé librement ledit jonc. Bien entendu, il faut mettre en place cette dernière douille avec son jonc dans le cylindre avant sa fermeture, alors qu'il contient la tige de piston solidaire de la première douille. Ce sont là des opérations multiples d'usinage de pièces, de montage de celles-ci selon une séquence bien déterminée, pour ne rien dire de la complexité d'une automatisation d'un tel processus de fabrication.

On notera à cet égard que l'inconvénient signalé plus haut s'applique pleinement au jonc de verrouillage qui, pour être introduit dans sa rainure de logement, doit forcément être comprimé radialement.

Il convient enfin de reconnaître l'existence d'un défaut de conception qui peut être rédhibitoire, si l'on se souvient que le but même du blocage en position d'extension est d'empêcher une retombée intempestive par temps froid lorsque le ressort pneumatique est « mou ». Dans le brevet français 2 243 372, à l'extension de la tige de piston, la rampe tronconique de la première douille solidaire de la tige commence par soulever le jonc pour l'amener depuis la base de son logement jusqu'à son sommet ; le jonc ne pouvant pas monter plus haut, il va demeurer dans sa position supérieure en se dilatant sous l'action de la rampe jusqu'à ce que l'enclenche arrive à son niveau et provoque l'enclenchement. Mais le système n'est pas pour autant bloqué, car rien n'empêche alors le jonc ainsi enclenché sur la douille de la tige, de retomber du sommet du logement jusqu'à sa base. Au cours de cette chute libre, la masse tombant acquiert d'autant plus d'énergie cinétique que le logement est long et que le moment d'inertie des pièces soulevées (porte ou abattant) est grand, de sorte que le jonc est chassé hors de la gorge et déverrouille ainsi le ressort pneumatique.

Conformément à la présente invention le cylindre du ressort pneumatique présente, en un point déterminé de sa paroi situé à proximité de son fond que traverse la tige de piston, un rétreint ou redan local faisant saillie vers l'intérieur jusqu'à un certain diamètre interne plus petit que le diamètre interne courant du cylindre, tandis que la tige de piston est verrouillable en une position extrême d'extension hors du cylindre, se situant précisément au niveau dudit point déterminé, par enclenche avec ledit rétreint ou redan d'un jonc monté sur la tige de piston pour se déplacer de concert avec elle sur toute sa course et de diamètre externe compris entre ledit diamètre interne de redan et ledit diamètre interne de cylindre.

Selon un mode de réalisation préféré de la présente invention, le jonc en question est thermo-sensible et agencé pour augmenter de diamètre lorsque la température décroît et inversement. Il pourra être avantageusement constitué d'une simple bilame sous forme d'une bague fendue, la couche métallique de plus fort coefficient de dilatation thermique étant située vers l'extérieur de la bague.

A titre d'exemple, la Demanderesse a choisi pour cette bilame une matière bimétallique du commerce vendue par la Société METALIMPHY sous la référence 108.SP.

De ce fait, on aura par temps froid — c'est-à-dire lorsque le ressort pneumatique est « mou » — un jonc de plus grand diamètre et par conséquent un blocage efficace par encliquetage de la tige de piston sur le rétreint du cylindre. Bien entendu, par temps chaud — c'est-à-dire lorsque le ressort pneumatique est « dur » — le jonc aura un diamètre plus faible et l'encliquetage en question sera moins net ou pourrait même ne pas avoir lieu du tout ; mais cela n'a alors guère d'importance car, le ressort étant « dur », il suffit pleinement à empêcher toute retombée spontanée du capot ou du hayon laissé en position d'ouverture.

La description qui va suivre en regard des dessins annexés, donnée à titre d'exemple non limitatif, fera bien comprendre comment l'invention peut être réalisée.

La figure 1 est une vue fragmentaire schématique en coupe axiale d'un ressort pneumatique perfectionné selon un mode de réalisation de la présente invention.

la figure 2 représente un détail à plus grande échelle.

Ce ressort pneumatique comprend essentiellement, comme dans le brevet français 2 311 967 sus-mentionné, un tube ou cylindre 1 rempli de gaz sous pression et dans lequel coulisse un piston 2 monté en bout d'une tige 3 qui traverse le fond 4 du cylindre aménagé comme à l'accoutumée pour guider la tige 3 tout en assurant une bonne étanchéité grâce à un dispositif de joint 5 avec godet de retenue de lubrifiant 6.

Selon la présente invention, ce ressort pneumatique — par ailleurs de type courant — présente une double innovation :

1. Sur la paroi du tube 1, à proximité des pièces de fond 4-5-6, est pratiqué par roulage un rétreint circulaire 7 à profil arrondi en saillie et dont la cote ou diamètre interne est désigné par D1.

2. Sur la tige 3, à proximité du piston 2 et du côté de celui-ci en regard du fond guide-tige 4, est prévu un jonc 8 dont la cote ou diamètre externe est désigné par D2, légèrement supérieur à D1 tout en demeurant inférieur au diamètre interne D3 du tube 1, ce jonc étant monté flottant sur la tige 3 et pris en sandwich entre deux rondelles 9-9 également flottantes. (Ce montage, mis à part le caractère flottant du « sandwich », rappelle à certains égards celui décrit dans le brevet britannique MARCONI 539 498 publié le 12 Septembre 1941.)

On voit donc qu'en faisant coulisser le piston 2 vers le fond guide-tige 4 — sens d'extension du dispositif télescopique — le jonc 8 viendra au contact du rétreint 7 et, se contractant par élasticité sous l'effet de rampe de celui-ci, il franchira la protubérance interne du rétreint 7, assurant de la sorte un verrouillage de la tige de piston 3 par encliquetage par élasticité du jonc 8. Cet arrêt mécanique simple permet de bloquer l'appareil en position d'extension.

Lorsqu'on veut le comprimer à partir de cette position détendue, il suffit alors d'exercer un effort plus important mais extrêmement bref pour passer le point d'encliquetage, après lequel on se retrouve sur la courbe normale effort/déplacement d'un ressort pneumatique classique.

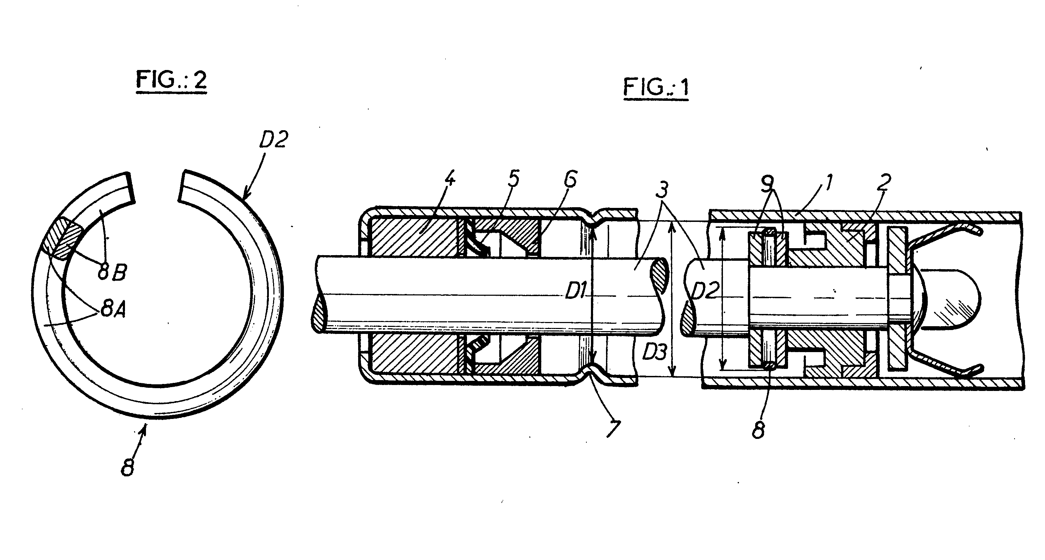

De préférence, le jonc 8 est constitué d'une bague bilame fendue représentée sur la figure 2 et conçue pour « s'ouvrir » lorsque la température décroît, afin au moins qu'aux basses températures le diamètre D2 soit effectivement plus grand que D1, d'où possibilité de blocage de l'appareil par encliquetage, comme décrit plus haut. A cet effet, le ruban bimétallique est recourbé dans le sens qui met à l'extérieur la couche métallique 8A de plus grand coefficient de dilatation thermique et à l'intérieur la couche métallique 8B de moindre dilatabilité.

Il va de soi que le mode de réalisation décrit n'est qu'un exemple et qu'on pourrait le modifier, notamment par substitution d'équivalents techniques, sans sortir pour cela du cadre de l'invention. En particulier on pourrait remplacer le roulage sur tout le pourtour du tube 1 donnant un rétreint circulaire continu 7, par des bossages localisés à répartition périphériques s'étendant dans la même région et faisant toujours saillie vers l'intérieur, le diamètre D1 devenant alors celui du cercle inscrit passant par les sommets internes des bossages.

**Revendications**

1. Ressort pneumatique à piston monté en bout d'une tige guidée avec étanchéité à travers le fond d'un cylindre qui est rempli de gaz sous pression et qui présente, en un point déterminé de sa paroi situé à proximité du fond guide-tige, un rétreint ou redan local faisant saillie vers l'intérieur jusqu'à un certain diamètre interne plus petit que le diamètre interne courant du cylindre, ladite tige (3) du piston (2) étant verrouillable en une position extrême d'extension hors du cylindre (1), caractérisé en ce que la position de verrouillage se situe précisément au niveau dudit point déterminé (7), le verrouillage se produisant par enclenchement avec ledit rétreint ou redan d'un jonc (8) monté sur la tige de piston (3) pour se déplacer de concert avec elle sur toute sa course et de diamètre externe (D2) compris entre ledit diamètre interne de redan (D1) et ledit diamètre interne de cylindre (D3).

2. Ressort pneumatique selon la revendication 1, caractérisé en ce que le jonc (8) est thermosensible et agencé pour augmenter de diamètre (D2) lorsque la température décroît, et inversement.

3. Ressort pneumatique selon la revendication 2, caractérisé en ce que le jonc (8) est constitué d'une bilame sous forme d'une bague fendue confectionnée à partir d'un ruban bimétallique recourbé dans le sens qui met à l'extérieur la couche métallique (8A) de plus grand coefficient de dilatation thermique et à l'intérieur la couche métallique (8B) de moindre dilatabilité.

### Claims

1. A pneumatic spring having a piston at the end of a rod which is sealingly guided through the end of a cylinder which is full of gas under pressure, and which has, at a determined point on its wall situated near the end through which the rod is guided, an abutment or step projecting towards the interior up to a certain internal diameter which is smaller than the normal internal diameter of the cylinder, the said rod (3) of the piston (2) being lockable in an extreme position of extension outside the cylinder (1), characterised in that the locking position is situated precisely at the position of the said determined point (7), the locking occurs by engagement with the said abutment or step of a resilient element (8) mounted on the piston rod for movement therewith throughout its entire path of movement, and of external diameter (D2) between the said internal diameter (D1) of the abutment or step and the said internal diameter of the cylinder (D3)

2. A pneumatic spring according to claim 1, characterised in that the resilient element (8) is heat-sensitive and adjusted to increase the diameter (D2) when the temperature falls, and vice versa.

3. A pneumatic spring according to claim 2, characterised in that the resilient element (8) is constituted by a bi-metal-strip in the form of a split ring constructed from a bi-metallic band curved in such a way that it has on the outside a metal layer (8A) of a greater coefficient of thermal expansion and a metal layer (8B) of lower thermal expansion on the inside.

### Ansprüche

1. Pneumatikfeder mit Kolben, welcher am Ende einer Stange befestigt ist, welche ihrerseits quer durch den Boden eines Zylinders abgedichtet geführt ist, welcher seinerseits mit unter Druck stehendem Gas gefüllt und an einer bestimmten Stelle seiner Wandung in der Nähe des Grundes der Kolbenstangenführung mit einer Einschnürung oder örtlichen Abstufung versehen ist, die nach innen bis zu einem bestimmten inneren Durchmesser vorspringt, der kleiner als der innere Durchmesser des Zylinders ist, wobei die Kolbenstange in ihrer äußersten aus dem Zylinder ausgefahrenen Lage feststellbar bzw. an einen Anschlag bringbar ist, dadurch gekennzeichnet, daß der Anschlag sich genau auf der Höhe der bereits genannten Stelle (7) befindet, und daß der Anschlag durch den Eingriff der Einschnürung oder Abstufung mit einem Ring (8) gebildet ist, welcher auf der Kolbenstange (3) befestigt ist, sich zusammen mit dieser über ihren gesamten Hub bewegt und einen äußeren Durchmesser (D2) aufweist, der zwischen dem genannten inneren Durchmesser (D1) der Einschnürung oder Abstufung und dem bereits genannten inneren Durchmesser (D3) des zylinders (1) liegt.

2. Pneumatikfeder nach Anspruch 1, dadurch gekennzeichnet, daß der Ring (8) auf Wärme ansprechend ausgebildet und seinen Durchmesser (D2) bei abnehmender Temperatur vergrößernd und umgekehrt angeordnet ist.

3. Pneumatikfeder nach Anspruch 2, dadurch gekennzeichnet, daß der Ring (8) aus einem Zweischichtmaterial in Form eines gespaltenen Ringes gebildet ist, welcher aus einem Bimetallband hergestellt inst, welches in dem Sinne gebogen ist, daß außen die Metallschicht (8A) mit dem größten thermischen Ausdehnungskoeffizienten und innen die Metallschicht (8B) mit der geringeren Ausdehnungsfähigkeit angeordnet ist.

FIG.: 2

FIG.: 1

0 059 665